(19) Europäisches Patentamt
European Patent Office
Office européen des brevets

(11) Publication number: **0 039 135**
**A2**

# (12) EUROPEAN PATENT APPLICATION

(21) Application number: 81301298.6

(22) Date of filing: 26.03.81

(51) Int. Cl.³: C 25 B 1/00

(30) Priority: 09.04.80 GB 8011702
12.11.80 GB 8036317

(43) Date of publication of application:
04.11.81 Bulletin 81/44

(84) Designated Contracting States:
AT BE CH DE FR GB IT LI LU NL SE

(71) Applicant: MURREX LIMITED
89/95 Ferry Lane
Rainham Essex RM13 9DP(GB)

(72) Inventor: Campbell, John Whatman
51 Parsonage Road
Rainham Essex(GB)

(72) Inventor: Couch, Christopher John
43 Clifton Road
Hornchurch Essex(GB)

(74) Representative: Ben-Nathan, Laurence Albert et al,
c/o MICHAEL BURNSIDE & PARTNERS 2 Serjeants'Inn
Fleet Street
London EC4Y 1HL(GB)

## (54) Production of ammonium metatungstate.

(57) Ammonium metatungstate is produced by contacting the anolyte side of a cation exchange membrane with an aqueous solution of ammonium tungstate and applying an electrical potential across the membrane such as to effect the transport of ammonium ions from said solution through the membrane to lower the pH of the solution to a level at which ammonium metatungstate is formed.

Fig. 1.

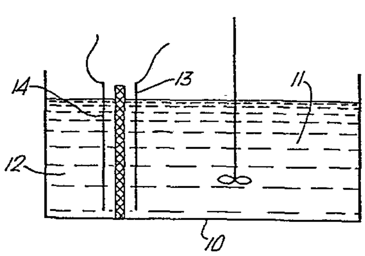


EP 0 039 135 A2

# PRODUCTION OF AMMONIUM METATUNGSTATE

The invention relates to the production of ammonium metatungstate.

Various chemical methods have been proposed for producing ammonium metatungstate (AMT) including:-

(a) heating ammonium paratungstate (APT) at 150°C for 4 hours;

(b) heating (APT) at 250°C until no more ammonia is evolved and, then leaching the partially calcined APT into hot demineralised water thus dissolving the more soluble AMT.

(c) neutralisation of ammonium tungstate (AT) liquor (both plant produced and synthetic) with excess $H_2 WO_4$, followed by filtration of the insolubles and evaporation of the mother liquor.

(d) extensive boiling of a mixture of $WO_3$ and various strengths of $NH_4 OH$.

(e) acidification of AT liquor with conc. HCl followed by extensive boiling, filtration and evaporation. None of these methods were found by the present inventors to be successful.

U.S. Patent No. 3,857,928 describes the preparation of AMT, by passing a solution of AT through a column containing a weakly cationic ion exchange resin (carboxylic acid type); the theory being that part of the $NH_4^+$ ions present in the AT liquor is absorbed by the resin thus reducing the $NH_4/W$ ratio in the liquor to the proportions required for AMT.

However, in practice disadvantages of this process have been found; namely an insufficient removal of ammonium ions in order to obtain the required $W/NH_4$ ratio for AMT, low tungsten recovery, also the production of large volumes of dilute AT liquor as a result of washing the column to remove residual tungsten in order to avoid the precipitation of tungsten in the column, thereby contaminating the resin, and the production of AMT liquor having a volume twice that of the feedstock which leads to relatively expensive evaporation costs to recover the AMT.

U.S. Patent No. 3,936,362 describes the preparation

of AMT transferring tungsten from sodium tungstate liquor by electodialysis through an anion selective membrane into $NH_4OH$ liquor thereby producing AMT. A disadvantage of this method is that there will be a partition of tungsten on each side of the membrane so that 100% tungsten recovery is unlikely.

German Offenlegungsschrift No. 2114395 refers to the use of electrodialysis for pH control but does not refer to tungsten processing technology and is not concerned with the problem with which the present invention is concerned, namely providing an improved method of producing ammonium metatungstate.

According to this invention there is provided a method for producing ammonium metatungstate comprising contacting the anolyte side of a cation exchange membrane with an aqueous solution of ammonium tungstate and applying an electrical potential across the membrane such as to effect the transport of ammonium ions from said solution through the membrane to lower the pH of the solution to a level at which ammonium metatungstate is formed.

The reaction can be represented by:-

$$\underset{(AT)}{4\ (NH_4)_2WO_4} + 8H_2O \rightarrow \underset{(AMT)}{(NH_4)_2\ O.4WO_3.\ 8H_2O} + 6NH_4^+ + \frac{3}{2}O_2 + 6e^-$$

The catholyte side of the membrane is contacted with dilute acid, e.g. hydrochloric or sulphuric, in order to neutralise the ammonium ions passing through the membrane. The pH of the catholyte wash liquor should desirably be controlled, e.g. to pH2. Very little reverse flow of anions occurs during the process. Gradually, the ammonium ion concentration in the anolyte is reduced to the required level. At first fine APT crystals separate out, but later they redissolve and a solution of AMT is formed. The AMT liquor is evaporated to dryness to produce dry white AMT or partially evaporated to produce a crystal slurry from which pure AMT is filtered and dried.

It is preferred that a minium of $NH_4OH$ should be used when digesting the $H_2WO_4$ in order to reduce the possibility of APT, formed initially during the electrodialysis, not redissolving. Ammonia insoluble residues present in the slurry after digestion should advantageously be filtered out within hours after digestion. Further the filtrate is preferably

diluted so that the initial strength of the AT liquor does not exceed 125 g/l $WO_3$.

At the completion of the electrodialysis process the pH of the anolyte liquor should normally be in the range 2.8 to 3.2 preferably 2.9 to 3.1.

If total evaporation is used to isolate AMT from the AMT liquor formed during electrodialysis, a pure $H_2WO_4$ feedstock should be used otherwise any anionic impurities will appear in the product. It may be desirable to purify the $H_2WO_4$ before use in the process. Moreover, drying should be carried out at less than 100°C to ensure that some of the water hydration is retained.

An advantage of the invention is that it makes it possible to obtain high tungsten recovery because it is ammonium ions which are transported through the membrane rather than tungstate ions as in the method disclosed in U.S. Patent No. 3,936,362. A further advantage is that the ion exchange material, namely the membrane, does not require regeneration as is the case with the process described in U.S. Patent No. 3,857,928.

Several commercially available cation membranes have been found suitable for use in a process according to the invention. These include the following:-

1. BDH $Na^+$ exchange membrane made by Asahi Glass Company Limited of Japan.
2. Ionac MC - 3470 cationic exchange membrane manufactured by Sybron Corporation.
3. Ionics 61-AZL389 cation-transfer membrane manufactured by Ionics, Incorporated.
4. Dupont Nafion 427 membrane made by Dupont.
5. Dupont Nafion 425 membrane.

Examples of processes according to the invention will now be described with reference to the accompanying drawings in which:-

Figure 1 is a diagrammatic illustration of an electrodialysis cell;

Figure 2 is a diagrammatic illustration of a flowing cell, system, and

Figure 3 is an exploded view of the cell of Figure 2.

EXAMPLE 1

The feedstock for this example was prepared by digesting 325g dry $H_2WO_4$ in a mixture of 150ml 0.88 $NH_4OH$ (theory for forming $(NH_4)_2\ O.WO_3$) and 2.85 litres demineralised water (demin). The mixture was filtered from a trace of insoluble material thus giving an AT liquor of strength approximately 100g/l $WO_3$.

2.75 litres of this liquor was placed in the anolyte compartment (11) of the cell (10) and 2.75 litres dil. HCl (≈1%) was placed in the catholyte compartment (12). A Pt electrode (13) was used in the AT liquor (to avoid contamination) and a stainless steel sheet (14) in the catholyte acid wash liquor. Both liquors were gently stirred and the current applied. The initial pH of the AT liquor was 8.7 and the initial current voltage 2.0 amps and 9 volts respectively. Throughout the electrolysis, the pH of the AT liquor was monitored. When the pH reached ≈8.3 crystals of APT began to precipitate with a corresponding drop in current to 1.3 amps. The pH continued to drop steadily and between pH= 4-5 the solids began to redissolve (the current slowly rising to 1.5 amps). At pH= 3.3. a clear solution was obtained and the electrolysis was then stopped (≈15 hours). Occasional additions of acid were needed in the wash liquor to neutralise the $NH_4$ as it passed through the membrane.

The liquor was then evaporated to dryness, filtering at intervals from traces of APT (≈10g) finally giving a yield of 252 g dry white AMT with the following composition.

| $NH_4$ | W | Cl- | Ca | $SiO_2$ | $W/NH_4$ ratio |
|---|---|---|---|---|---|
| 4.1% | 71.5% | 0.28% | 40 ppm | 80 ppm | 17.4 |

The theoretical $W/NH_4$ ratio for AMT is 20.44. The following comments can be made about Example 1.

(a) the $W/NH_4$ ratio was now approaching theory but because traces of APT were still present, it was thought the final pH at 3.3. was not low enough (see Example 2).

(b) traces of chlorine were noticed on the AT side

of the cell towards the end of the electrodialysis. This could have been due to a trace of Cl- in the tunstic acid feedstock (this assayed at 0.28% Cl-) or possibly to some transport of $Cl^-$ anions from the dil HCl through the membrane (see Example 4).

(c) the dil HCl wash was assayed for W and found to contain <0.1g/l, Thus W recovery is approaching 100%.

EXAMPLE 2.

The conditions for this Example were as for Example 1, except that the final pH of the AT liquor was taken down to 2.9. During the evaporation stage fine traces of yellow solid were filtered out. This could possibly have been $H_2WO_4$ but amounted to < 1g. The AMT had the following composition :-

| $NH_4$ % | W | $W/NH_4$ ratio |
|---|---|---|
| 3.8 | 72.65 | 19.1 |

The $W/NH_4$ ratio was therefore closer to the theoretical value.

EXAMPLE 3.

This was conducted in a similar manner to that of Example 1, but the final pH was 3.1 (i.e. between that of Examples 1 and 2). The AMT liquor was completely free from $H_2WO_4$ and APT during the evaporation stage and the AMT had the following composition

| $NH_4$ % | W | $W/NH_4$ ratio |
|---|---|---|
| 3.7 | 73.2 | 19.8 |

The $W/NH_4$ Ratio was therefore almost at the theoretical value.

EXAMPLE 4.

In this Example dil. $H_2SO_4$ was used instead of

dil HCl in the catholyte compartment (12). The pH was taken down to 3.1 and the AMT assayed as follows:

| $NH_4$ | W | Cl- | $SO_4^{2-}$ | $W/NH_4$ ratio |
|---|---|---|---|---|
| 3.8 | 73.2 | 0.06 | 0.12 | 19.3 |

As can be seen the Cl- value is lower compared to that in Example 1, but some $SO_4^{2-}$ is present. This seems to indicate some anion transfer is occuring.

All the following Examples incorporated a continuous tap water wash instead of a static dil. acid wash. This meant that electolysis times were longer (less current) but no contamination of the AMT was observed.

EXAMPLES 5 and 6

In these Examples dry $H_2 WO_4$ was digested in the theoretical quantity of dilute $NH_4OH$ and the volume of demin. adjusted to give various concentrations of $WO_3$ in the AT liquor.

(a) $WO_3$ @ 150g/l - unsuccessful electrodialysis
(b) $WO_3$ @ 125g/l- AMT soluction obtained

EXAMPLE 7

As confirmation some plant AT liquor was diluted to 125 g/l $WO_3$ and electrodialysed as normal. This Example was successful, although the AMT formed was pale yellow

in colour.

For the following Examples a smaller electrodialysis unit was constructed. This was the same as used in previous Examples except that the volume of the anolyte compartment (11) (i.e. the compartment containing the ammonium tungstate liquor) was reduced from 2.8 litres to 1.2 litres, thus enabling tests to be carried out more quickly. A continuous tap water wash was incorporated in the catholyte compartment. This compartment was also made smaller (350ml) thus enabling a more efficient wash process to be carried out.

The width of the cell was 11.5cm and the effective area of the membrane 20 $cm^2$. The height of the cell was 13 cm with the liquid levels in the compartments being 10.5 cm. The length of compartment (11) was 9.5cm and the width of compartment (12) was 3 cm.

The general method for the following Examples was to digest 165g tungstic acid (of various quality) in a mixture of 1.43 litres demin. and 75 ml 0.880 $NH_4OH$ to form $(NH_4)_2O.WO_3$. The insoluble residues were then filtered, resulting in an ammonium tungstate liquor of strength $\approx$ 100g/l $WO_3$. 1.2 litres of this liquor was then used in the cell.

EXAMPLE 8

Tungstic acid was given 4 x decant washes with cold demin., before filtering and drying. 165g of this material was then digested as indicated above and electrodialysed as usual. The time taken to reduce the pH of the ammonium tungstate liquor from its initial value of 8.6 to the required 2.9 was 22 hours, the current and voltage being 0.5 amps and 9 volts respectively. A clear liquor was obtained which on evaporation to dryness yielded 94g of white solid with the following composition:-

| W | $NH_4$. | $W/NH_4$ ratio |
|---|---|---|
| 71.5% | 3.7% | 19.32 |

a similar trial was carried out using unwashed plant produced

tungstic acid as feedstock, but was unsuccessful as regards AMT liquor clarity and product purity. This example thus indicates the presence of undesirable impurities (probably residual HCl) in plant produced tungstic acid, which inhibited the conversion to AMT, but is easily removed by further washing.

A further indication that the impurity was residual HCl is the evolution of a trace of chlorine gas at the anode electrode towards the end of electrodialysis.

EXAMPLE 9.

For this Example, 300g plant produced APT was digested for 2 hours at 90°C with 350ml conc. HCl. The resulting tungstic acid was filtered, washed well and dried. Again 165g dry material was digested as normal and electrodialysed. Conditions were as for Example 9, the yield of AMT was 96g and assayed as follows :-

| W | $NH_4$ | $W/NH_4$ ratio |
|---|---|---|
| 72.1% | 3.6% | 20.02 |

This Example again confirms that pure tungstic acid is necessary for AMT production.

EXAMPLE 10.

For this Example an alternative approach was made in attempting to produce AMT from APT directly.

This would obviously introduce an extra process stage but would have the advantage of a purer feedstock. Thus 100g dry APT crystal was digested in 1.4 litres hot (60°) demineralised/water before filtering from insoluble APT (30g). 1.2 litres of this liquor was then electrodialysed as normal, the starting pH being 6.2 and the final pH being 2.9. (20 hours dialysis at 0.6 amps and 9 volts). The AMT (55g) assayed as follows :

| W | $NH_4$ | W/NH ratio |
|---|---|---|
| 72.35% | 3.7% | 19.55 |

This route was successful, the drawback being (apart from the extra stage) the limited solubility of APT in water. The liquor produced had a $WO_3$ concentration of $\approx$40g/l and the process will be costly from the point of view of evaporation.

The process conducted in a plant will use a flowing cell type arrangement as indicated in Figures 2 and 3. In this equipment, large membrane areas are available enabling large current flow. The respective solutions are passed through the anode and cathode spaces on opposite sides of the membranes such that the reaction may be completed in a short residence time in the cell bank. Suitable equipment is available from Asahi Glass Co. Limited, Sybron Corporation and V.V. Filters Limited.

The cell bank (20) comprises a series of anolyte chambers defined by frame members (21), a series of catholyte chambers defined by frame members (22), separated by ion-exchange membranes (23) and anodes (24) and cathodes (25) in each of the respective chambers. Manifolds (26,27 and 28,29) are provided respectively for circulating anolyte and catholyte continuously through the chambers (21,22) from their respective storage tanks (30,31). The anolyte, the AMT liquor, is discharged for further processing after the electrodialysis is complete and the required pH level reached. A Rectifier Unit (33) provides a current to the anodes and cathodes. The particular multiple cell unit shown in Figure 3 is manufactured by V.C. Filters Limited.

EXAMPLE 11

This example was carried out on a 2 cell dipole dynamic rig (supplied by V.C. Filters) with a total membrane area of 422 $cm^3$. The AT liquor was produced by digesting 1.56 kg

Tungstic acid in a mixture of 720 ml 0.88 $NH_4OH$ and 11.3 litres demineralised water. This liquor after filtering out the insoluble material, comprised the anolyte, while the catholyte consisted of 24 litres of demineralised water containing 50 ml of conc. $H_2SO_4$. Both liquors were continuously recirculated from their respective containers through their respective compartments using centrifugal pumps. A potential was applied across the unit and the electrodialysis continued until the pH of the anolyte was reduced from its initial value of 8.6 to 2.8. This operation took 24 hours, the voltage being 9v and the current varying from 2 to 4 amps. The catholyte was dosed with conc. $H_2SO_4$ to maintain its conductivity at a pH in the range 2. to 2.5 during electrodialysis. The anolyte (AMT solution) was now discharged from the unit and concentrated by evaporation to approximately 1 litre, before cooling and isolating 840g of AMT. The mother liquor was further concentrated to dryness to give a second crop of 127g. The main crop of AMT assayed at 67.86%W, and 3.6% $NH_4^+$, giving a W/$NH_4$ ratio of 18.85. This example shows that it is possible to prepare AMT by electrodialysis using a dynamic system.

CLAIMS

1. A method for producing ammonium metatungstate comprising contacting the anolyte side of a cation exchange membrane with an aqueous solution of ammonium tungstate and applying an electrical potential across the membrane such as to effect the transport of ammonium ions from said solution through the membrane to lower the pH of the solution to a level at which ammonium metatungstate is formed.

2. A method according to claim 1, wherein the electrolytic process is completed when the pH is lowered to a value in the range 2.8 to 3.2

3. A method according to claim 2 wherein said range is 2.9 to 3.1.

4. A method according to any of claims 1 to 3 wherein the pH and conductivity of the catholyte wash liquor is controlled by adding hydrochloric acid.

5. A method according to claim 4 wherein a controlled flow of hydrochloric acid is continuously added to the catholyte wash liquid.

6. A method according to any preceding claim wherein the amount of $NH_4$ OH used to digest $H_2WO_4$ to form said aqueous solution of ammonium tungstate is controlled at a level low enough not to prevent any ammonium paratungstate, which may be formed initially during the electrolytic process, from redissolving.

7. A method according to any preceding claim wherein the initial strength of said aqueous solution is not above 125 g/l $WO_3$.

8. A method according to any preceding claim wherein subsequent drying of the ammonium metatungstate liquor, formed by the electrolysis, to isolate ammonium metatungstate, is carried out at a temperature of less than 100°C.

Fig. 1.

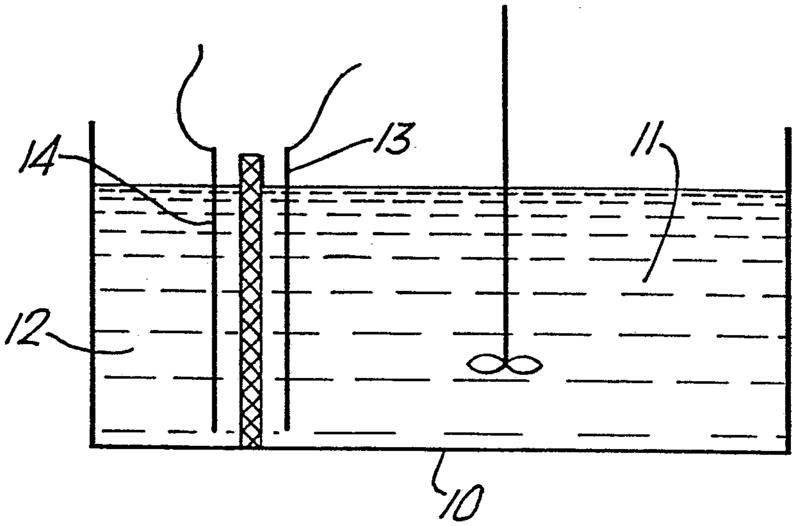


Fig. 2.

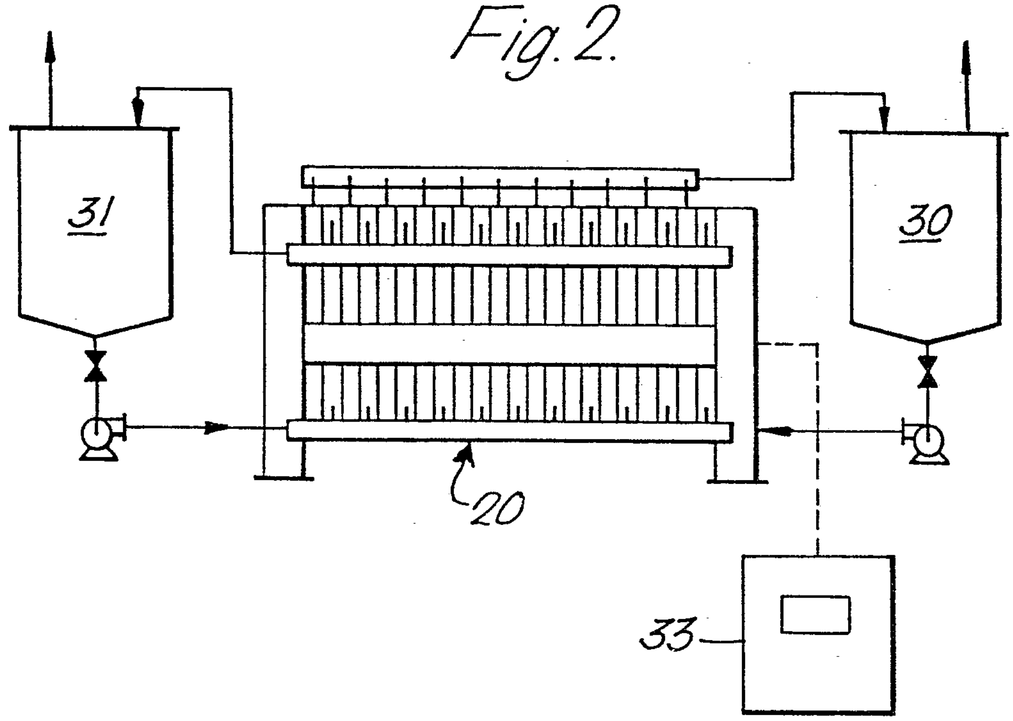

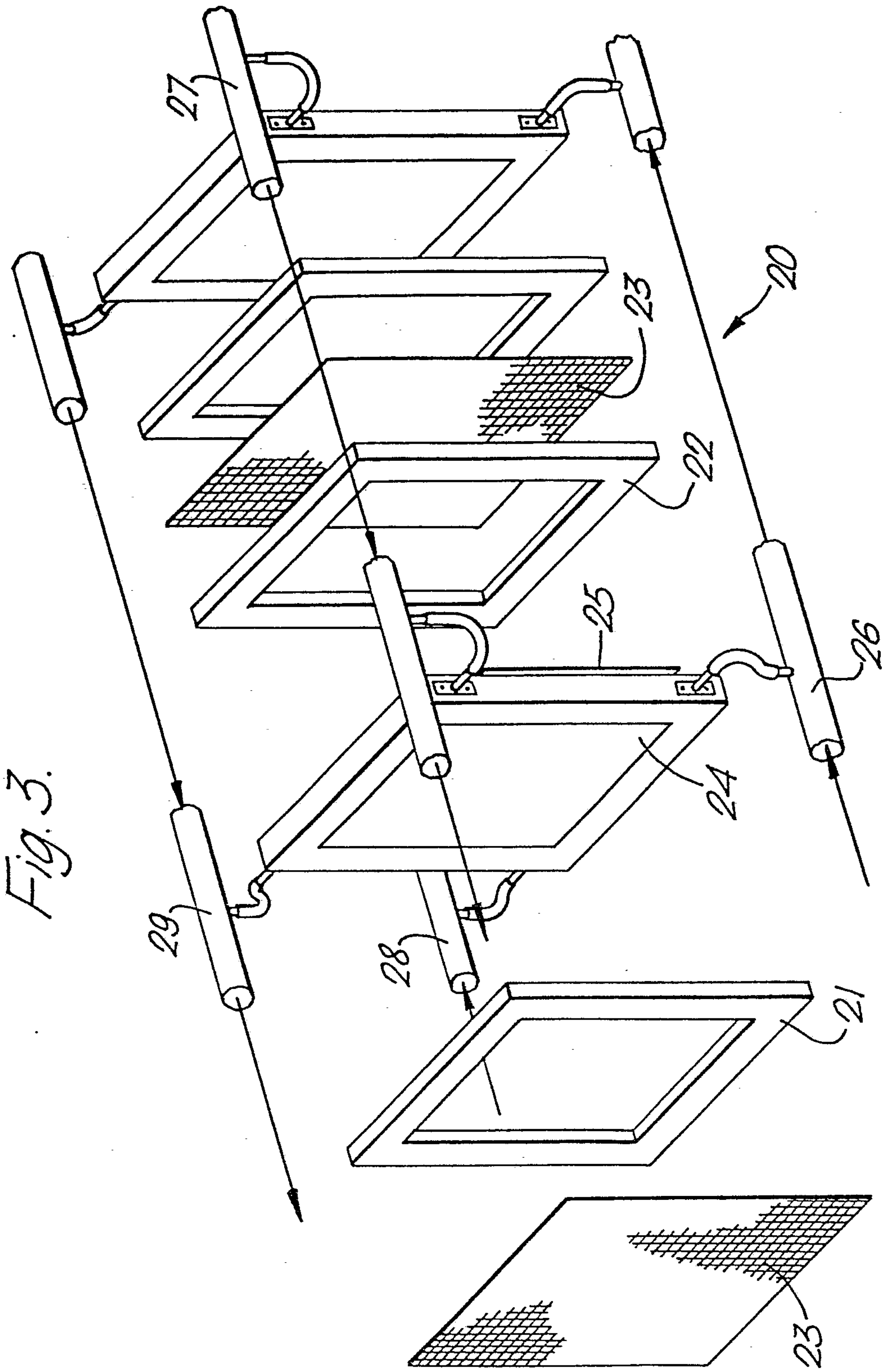


Fig. 3.